# EUROPEAN PATENT APPLICATION

(11) **EP 4 726 931 A2**
(43) Date of publication of application: **15.04.2026**
(21) Application number: 24885062.0
(22) Date of filing: 31.12.2024
(51) Int. Cl.: H01R 13/02, H01M 50/298, H02J 7/00, H01M 10/42

(54) **ELECTRONIC CONTROL DEVICE, BATTERY DEVICE, RELATED DEVICE, ENERGY STORAGE SYSTEM AND CHARGING NETWORK**

(30) Priority: 31.10.2023 CN 202322933204 U; 29.11.2023 CN 202323249361 U; 19.02.2024 CN 202420304927 U; 16.07.2024 CN 202421675064 U
(71) Applicant: Contemporary Amperex Technology Co., Limited, Ningde, Fujian 352100 (CN)
(72) Inventor: LI, Yuanxin, Ningde, Fujian 352100 (CN); QIU, Guanda, Ningde, Fujian 352100 (CN); PENG, Yong, Ningde, Fujian 352100 (CN); WANG, Chong, Ningde, Fujian 352100 (CN)
(74) Representative: Lorenz Seidler Gossel Part. mbB
(86) International application number: PCT/CN2024/144613
(87) International publication number: WO 2025/093067

(57) **Abstract**

The present application belongs to the technical field of battery production. Provided are an electronic control device, a battery device, a related device, an energy storage system, and a charging network. The electronic control device comprises a battery management circuit board and an electrical connection assembly, wherein the battery management circuit board is provided with a first connecting terminal, which first connecting terminal is electrically connected to an internal circuit of the battery management circuit board; and the electrical connection assembly comprises a bearing member and a conductive component, the conductive component being connected to the bearing member, and the conductive component comprising a conductive part, a second connecting terminal, and a third connecting terminal. The second connecting terminal is connected to the third connecting terminal by means of the conductive part, the second connecting terminal is connected to the first connecting terminal, and the third connecting terminal is connected to a busbar or a relay inside the electric control device. The present application is aimed at replacing the connection mode of a wire harness, so as to simplify the structure and improve the integration level.

## Description

The present application claims priority to Chinese Patent Application No. 2023229332048, filed with the China National Intellectual Property Administration on October 31, 2023 and entitled "CONDUCTOR STRUCTURE, SHELL STRUCTURE, ELECTRONIC CONTROL APPARATUS, BATTERY, AND ELECTRIC DEVICE", which is incorporated herein by reference in its entirety; claims priority to Chinese Patent Application No. 2024203049273, filed with the China National Intellectual Property Administration on February 19, 2024 and entitled "COVER BODY STRUCTURE, BATTERY PACK, AND ELECTRIC APPARATUS", which is incorporated herein by reference in its entirety; claims priority to Chinese Patent Application No. 2024216750647, filed with the China National Intellectual Property Administration on July 16, 2024 and entitled "HIGH-VOLTAGE BOX, BATTERY DEVICE, AND ELECTRIC APPARATUS", which is incorporated herein by reference in its entirety; and claims priority to Chinese Patent Application No. 2023232493613, filed with the China National Intellectual Property Administration on November 29, 2023 and entitled "HIGH-VOLTAGE POWER DISTRIBUTION DEVICE, BATTERY, AND ELECTRIC DEVICE", which is incorporated herein by reference in its entirety.

### TECHNICAL FIELD

The present application relates to the technical field of battery production, and in particular, to an electronic control device, a battery device, a related device, an energy storage system, and a charging network.

### BACKGROUND

A power distribution device is a key assembly in an electric power system, and may also be referred to as a power distribution box. In a battery device, the power distribution box can distribute electric energy in a battery cell assembly to various high-voltage systems of external electric devices. The power distribution box is usually integrated with a battery management system (BMS), and the BMS optimizes the charging and discharging processes of a battery by collecting voltage data, thereby prolonging the battery life and improving the efficiency of the overall system.

In the related art, the BMS is connected to the electronic components in the power distribution box by means of wire harnesses to collect electrical signals, and the disorderly arrangement of the wire harnesses easily leads to misconnections, resulting in a complex structure and a low integration level of an electronic control system.

### SUMMARY

An objective of the embodiments of the present application is to provide an electronic control device, a battery device, a related device, an energy storage system, and a charging network, aiming to solve the technical problems of a complex structure, disorder, and a low integration level caused by the use of wire harnesses to collect electrical signals in the electronic control device.

### TECHNICAL SOLUTION

An embodiment of the present application adopts the technical solutions below:

In a first aspect, the present application provides an electronic control device, comprising:
a battery management circuit board provided with a first connecting terminal, the first connecting terminal being electrically connected to an internal circuit of the battery management circuit board; and
an electrical connection assembly, comprising a bearing member and a conductive component, the conductive component being connected to the bearing member, the conductive component comprising a conductive component, a second connecting terminal, and a third connecting terminal, the second connecting terminal being communicated with the third connecting terminal by means of the conductive component, the second connecting terminal being connected to the first connecting terminal, and the third connecting terminal being used to connect a busbar or a relay inside the electrical control device.

In this embodiment, the collection and transmission of electrical signals between the relay and the battery management circuit board are realized through the electrical connection assembly. The electrical connection assembly integrates the conductive component and each third connecting terminal through the bearing member, and realizes the transmission of the electrical signals by means of the first connecting terminal being plugged into the second connecting terminal, so that the overall structure of the electronic control device has a high integration level. The third connecting terminal replaces the wire harness structure, so that the overall structure is simpler, neater, and more orderly, and the regularity of the structure is improved.

In one embodiment, a plurality of third connecting terminals are provided, and each third connecting terminal extends from a position connected to the conductive component towards a direction away from the conductive component.

In this embodiment, by providing a plurality of third connecting terminals, electrical signals on different relays can be collected for independent transmission, and then transmitted to the battery management circuit board via the second connecting terminal to achieve the purpose of simultaneously monitoring a plurality of relays.

In one embodiment, the second connecting terminal is configured to be plugged into the first connecting terminal.

In this embodiment, a connection mode of plugging can improve the convenience of the connection between the first connecting terminal and the second connecting terminal.

In one embodiment, an elastic limiting portion is formed on the first connecting terminal or the second connecting terminal to enable an elastic limiting connection between the first connecting terminal and the second connecting terminal.

In this embodiment, by providing the elastic limiting portion to perform limiting between the first connecting terminal and the second connecting terminal, the reliability of the connection between the first connecting terminal and the second connecting terminal is improved, and the detachable connection between the first connecting terminal and the second connecting terminal can be realized more conveniently.

In one embodiment, the second connecting terminal comprises a plurality of contact pins, each contact pin comprising a base portion, an elastic limiting portion connected to the base portion, and a plug pin portion connected to the elastic limiting portion, the base portion being electrically connected to the conductive component, and the elastic limiting portion being elastically deformable; and a plurality of conducting holes are formed on the first connecting terminal, each elastic limiting portion being correspondingly plugged and limited in each conducting hole, the plug pin portion being electrically connected to a hole wall of the conducting hole.

In this embodiment, the elastic limiting portion is disposed on the second connecting terminal, the plug pin portion is used to be directly electrically connected to the hole wall of the conducting hole, and the base portion may bear the elastic limiting portion and the plug pin portion, so as to enable the entire second connecting terminal to be elastically limited to each other while being electrically connected to the first connecting terminal, resulting in a simple and compact structure and a reliable connection.

In one embodiment, the elastic limiting portion comprises two elastic arms connected between the base portion and the plug pin portion, and the two elastic arms are disposed facing each other and form an elastic contraction space.

In this embodiment, the elastic limiting portion adopts a structural form of two elastic arms that can face towards or away from each other, which is simple in structure, easy to manufacture, and capable of providing sufficient elastic pressing force, making the limiting between the first connecting terminal and the second connecting terminal more reliable and the plugging and unplugging more convenient.

In one embodiment, the conductive component is disposed opposite to the battery management circuit board in a first direction, the plug pin portion extends in the first direction, and a central axis of the conducting hole is parallel to the first direction.

In this embodiment, the extension direction of the contact pin is allowed to be the same as a direction in which the battery management circuit board is disposed opposite to the conductive component, so as to facilitate the direct plugging between the battery management circuit board and the conductive component to facilitate the improvement of the convenience of plugging and pairing between the first connecting terminal and the second connecting terminal.

In one embodiment, the conductive component and the bearing member are injection molded into an integrated structure.

In this embodiment, the injection molding between the conductive component and the bearing member is an integrated structure, so as to improve the reliability of the connection between the conductive component and the bearing member.

In one embodiment, the conductive component and the third connecting terminal are welded into an integrated structure; or
the conductive member is connected to the third connecting terminal by means of a fastening assembly.

In this embodiment, the connection between the conductive component and the third connecting terminal may adopt a plurality of different methods to improve the installation flexibility, the connection reliability, and the like between the conductive component and the third connecting terminal.

In one embodiment, the bearing member is provided with a receiving groove in which the conductive component is received, one end of each third connecting terminal is connected to the conductive component, and the other end protrudes outside a groove opening of the receiving groove.

In this embodiment, the conductive component is received in the receiving groove formed on the bearing member, so that the bearing member plays a role in covering and protecting the conductive component.

In one embodiment, the bearing member comprises a bottom plate and a vertical plate connected in a circumferential directional of the bottom plate through enclosure, the bottom plate and the vertical plate jointly forming the receiving groove through enclosure; and the conductive component is fitted and connected to the bottom plate.

In this embodiment, the bearing member adopts a shell plate structure, with the bottom plate supporting the conductive component and the vertical plate being enclosed in the circumferential direction of the bottom plate to form the receiving groove. The vertical plate can provide circumferential protection for each component. The bearing member adopts the shell plate structure, which is simple in structure, easy to manufacture, and convenient to ensure the lightweight of the electronic control device.

In one embodiment, the battery management circuit board is disposed opposite to the conductive component, the battery management circuit board is located on one side of the groove opening of the receiving groove, and the battery management circuit board is provided with a through hole for avoiding the third connecting terminal.

In this embodiment, the conductive component is disposed opposite to the battery management circuit board on one side of the groove opening of the receiving groove. By providing a through hole on the battery management circuit board, the function of causing the third connecting terminal to avoid the battery management circuit board can be achieved, thereby making the assembly structure between the battery management circuit board and the third connecting terminal more compact, which is beneficial to improve space utilization.

In one embodiment, the electronic control device further comprises a first positioning structure connected to the battery management circuit board and a second positioning structure connected to the bearing member, and the first positioning structure is plugged into and mated with the second positioning structure.

In this embodiment, the provision of the first positioning structure and the second positioning structure helps to improve the accuracy of the assembly between the battery management circuit board and the bearing member, and further improve the accuracy of the pairing of the first connecting terminal and the second connecting terminal.

In one embodiment, the conductive component is arranged to extend in a second direction, the second connecting terminal is located at one extending end of the conductive component, and a plurality of third connecting terminals are arranged at intervals in the second direction.

In this embodiment, the second connecting terminal is disposed at one extending end of the conductive component, thereby facilitating avoiding a middle region to reduce interference with other electrical components, making the space arrangement more reasonable, and helping to improve space utilization.

In one embodiment, the relay is provided with a conducting terminal, and the electronic control device comprises a locking assembly which is connected between the conducting terminal and the third connecting terminal.

In this embodiment, the conducting terminal is connected to the third connecting terminal by means of the locking assembly, thereby facilitating detachment between that the third connecting terminal and the conducting terminal for later maintenance and replacement of various components, and making it more convenient and flexible to use.

In one embodiment, the relay is provided with a conducting terminal which is connected to the third connecting terminal and is a high-voltage terminal.

In this embodiment, the battery can be protected from damage caused by overvoltage and undervoltage through high-voltage sampling, so as to ensure that the battery operates within a safe working range.

In a second aspect, the present application provides a battery device, comprising a battery cell assembly and the electronic control device according to any one of the above, wherein the battery cell assembly is electrically connected to the electronic control device.

In a third aspect, the present application provides an energy storage device, comprising a plurality of battery devices according to any one of the above, where the battery devices are used to provide electric energy.

In a fourth aspect, the present application provides an energy storage system, comprising a power conversion device and the energy storage device described above, where the power conversion device is used to electrically connect a power generation device and the energy storage device.

In a fifth aspect, the present application provides an electric device, comprising the battery device according to any one of the above, the energy storage device described above, or the energy storage system described above, where the battery device is used to store or provide electric energy.

In a sixth aspect, the present application provides a charging network, comprising a charging pile and the energy storage device described above or the energy storage system described above, where the energy storage device is used to provide electric energy for the charging pile.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

To describe technical solutions in embodiments of the present application more clearly, the following briefly describes the accompanying drawings for describing the embodiments of the present application or the prior art. It is clear that the accompanying drawings described in the following are merely some embodiments of the present application. Those skilled in the art can still derive other figures from the these figures without creative efforts.
FIG. 1 is a schematic structural diagram of a vehicle provided in some embodiments of the present application;
FIG. 2 is a schematic diagram of an exploded structure of a battery device provided in some embodiments of the present application;
FIG. 3 is a schematic structural diagram of an electronic control device provided in some embodiments of the present application;
FIG. 4 is a schematic diagram of an exploded structure of the electronic control device provided in some embodiments of the present application;
FIG. 5 is a schematic structural diagram of the assembly of a battery management circuit board, a first connecting terminal, and a third connecting terminal in the electronic control device provided in some embodiments of the present application;
FIG. 6 is a first schematic diagram of an exploded structure of FIG. 5;
FIG. 7 is a partially enlarged diagram of position B in FIG. 6;
FIG. 8 is a partially enlarged diagram of position C in FIG. 7;
FIG. 9 is a second schematic diagram of the exploded structure of FIG. 5;
FIG. 10 is a third schematic diagram of the exploded structure FIG. 5; and
FIG. 11 is a sectional diagram of A-A in FIG. 3.

### Description of reference signs:

1000: vehicle; 1100: battery device; 1110: battery cell assembly; 1120: electronic control device; 1121: battery management circuit board; 11211: through hole; 1122: first connecting terminal; 11221: conducting hole; 1123: electrical connection assembly; 11231: bearing member; 11231a: receiving groove; 11231b: bottom plate; 11231c: vertical plate; 11232: conductive component; 11233: second connecting terminal; 11234: contact pin; 11235: base portion; 11236: elastic limiting portion; 11236a: elastic arm; 11236b: elastic contraction space; 11237: plug pin portion; 11238: first positioning structure; 11239: second positioning structure; 1124: electronic component; 11240: third connecting terminal; 11241: conducting terminal; 1125: base assembly; 11251: mounting groove; 1126: locking assembly; 1130: box body; 1131: first portion; 1132: second portion; 1133: receiving space; 1200: controller; 1300: motor; X: first direction; Y: second direction.

### DESCRIPTION OF EMBODIMENTS

Embodiments of the technical solutions of the present application are described in detail below with reference to the drawings. The following embodiments are only used to more clearly illustrate the technical solutions of the present application, and thus are used as embodiments only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the technical terms "mounted", "connected to", "connect", "fixed", and the like should be understood in a broad sense, which, for example, may be understood as fixed connection, detachable connection or integral connection, may be understood as mechanical connection, or electrical connection, or may be understood as direct connection, indirect connection via an intermediate medium, or communication between the interiors of two elements or interactions between two elements. A person of ordinary skill in the art may understand the specific meanings of the above terms in the embodiments of the present application according to specific situations.

A battery device may comprise one or more battery cell assemblies for providing voltage and capacity. The battery cell assembly may comprise a plurality of battery cells which are connected in series, in parallel, or in series-parallel by means of a bus component.

The battery device may be a battery pack. The battery pack generally comprises a box body and one or more battery cell assemblies accommodated in the box body.

The battery device further comprises a high-voltage power distribution device (also called a battery distribution system (BDU) and a battery management system (BMS). The high-voltage power distribution device may be commonly known as a power distribution box or a high-voltage power distribution box. The power distribution box is a key assembly in an electric power system. In the battery device, the power distribution box can distribute the electric energy in the battery cell assembly to various high-voltage systems of external electric devices. The high-voltage power distribution device can control the charging and discharging circuits of the battery device to operate smoothly, and the battery management system is mainly responsible for intelligently managing and maintaining a battery system, monitoring a battery state, and ensuring the safe operation of the battery. The electric power of the battery cell assembly is transmitted to the high-voltage power distribution device, and then transmitted to an electric apparatus through the high-voltage power distribution device. The voltage, current and temperature parameters of the battery cell assembly are collected and monitored by the battery management system. The battery management system controls the on-off of a circuit in the high-voltage power distribution device, thereby controlling the electric power of the battery cell assembly to be transmitted to the battery management system of the electric apparatus. The power distribution box is usually integrated with the battery management system (BMS), and the BMS optimizes the charging and discharging processes of the battery by collecting voltage data, thereby prolonging the battery life and improving the efficiency of the overall system.

In the battery device, the high-voltage power distribution device mainly controls the charging and discharging circuits of the battery device to operate smoothly, and is responsible for controlling power-on and power-off processes, a pre-charging process, and a charging process of a high-voltage electrical circuit, where the high-voltage power distribution device comprises various electronic components and electrical connection components for realizing circuit connection, as well as sampling components for collecting circuit signals and connectors for transmitting the electrical signals. For example, the electronic components comprise high-voltage relays, shunts, pre-charging relays, pre-charging resistors, fuses, etc.; the electrical connection components comprise copper bars, aluminum bars, wire harnesses, etc.; the sampling components comprise low-voltage sampling lines, sampling terminals, etc.; and the connectors comprise low-voltage connectors, high-voltage connectors, etc.

The battery management system has the main functions of data collection, state detection, safety protection, charging control, energy management, balance management, etc., and comprises a main control unit, i.e., a battery management unit (BMU). The BMU comprises a data collection circuit, a sensor, and a microcontroller (MCU) for processing collected data and communicating with other systems of a vehicle. In a distributed architecture, the battery management system may further comprises a cell supervisory controller (CSC) which is responsible for detecting a certain number of battery cells or modules, collecting voltage, current, and temperature data, and sending this information to the BMU, and mainly comprises a sensor for detecting a battery cell and a data collection circuit.

However, the electronic component in the high-voltage power distribution device of a related product is connected to the BMU through wire harnesses. Due to the numerous voltage collection positions, the number of wire harnesses is large and the wiring positions are numerous, resulting in disorderly wire harnesses inside the high-voltage power distribution device, which is very prone to the risk of wrong connection during wiring or maintenance, and occupies a large amount of space inside the battery device, resulting in a complex structure and a low integration level between the electronic component and the BMU.

In view of this, an embodiment of the present application provides an electronic control device, which adds an electrical connection assembly between a battery management system and an electronic component (specifically, a relay). In the electrical connection assembly, a third connecting terminal transmits a collected electrical signal on a busbar or a relay to a second connecting terminal via a conductive component. The second connecting terminal is connected and conducted to a first connecting terminal on a battery management circuit board, so that sampling and transmission positions are arranged in a centralized manner, and the need for wire harnesses is eliminated, which is conductive to saving space, simplifying the structure, and improving the integration level of the entire device.

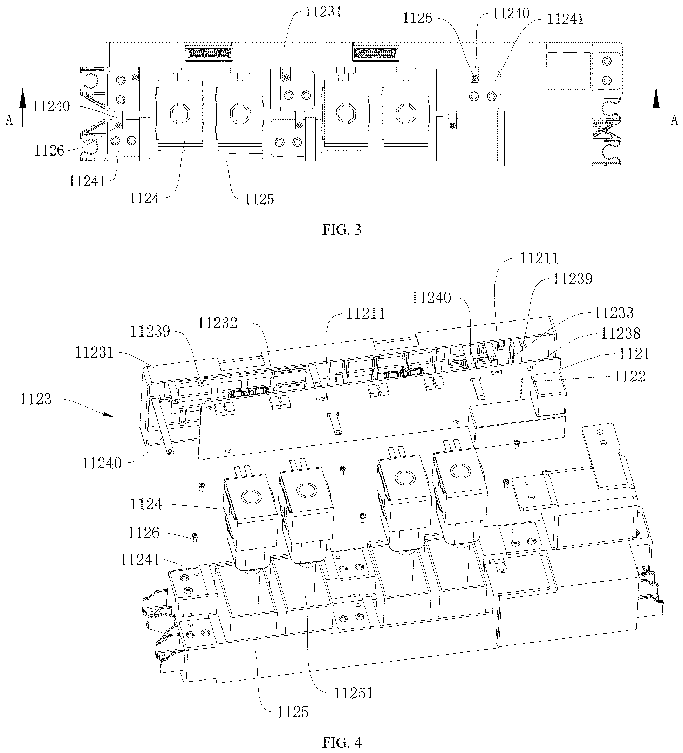

Specifically, referring to FIG. 3 to FIG. 5, an embodiment of the present application provides an electronic control device 1120, comprising a battery management circuit board 1121 and an electrical connection assembly 1123, where the battery management circuit board 1121 is provided with a first connecting terminal 1122 which is electrically connected to an internal circuit of the battery management circuit board 1121; the electrical connection assembly 1123 comprises a bearing member 11231 and a conductive component 11232, the conductive component 11232 being connected to the bearing member 11231 and comprising a conductive component 11232, a second connecting terminal 11233, and a third connecting terminal 11240, the second connecting terminal 11233 being communicated with the third connecting terminal 11240 by means of the conductive component 11232, the second connecting terminal 11233 being connected to the first connecting terminal 1122, and the third connecting terminal 11240 being used to connect a busbar or a relay 1124 inside the electronic control device.

Here, for the relay 1124 or the busbar, the relay 1124 is an electronic component, and the busbar is a conductive structural member. The busbar may be a conductive structural member connected to the relay 1124. The relay 1124 comprises a positive relay, a pre-charge relay, a negative relay, etc. The relay 1124 is provided with a conducting terminal 11241. The conducting terminal 11241 may be understood as a conductive structure on the relay 1124 for collecting and outputting an electrical signal. In this example, the conducting terminal 11241 may be described by taking a voltage terminal as an example, that is, in this example, the collected electrical signal may be described by taking a voltage signal as an example. The third connecting terminal 11240 may be in contact with the conducting terminal 11241, thereby achieving conduction and electrical connection between the two, and the third connecting terminal 11240 may acquire the electrical signal data on the conducting terminal 11241. The conducting terminal 11241 may adopt a sheet-like, wire-like or thread-like conductive structure. The conducting terminal 11241 may also be understood as a contact terminal or a copper bar structure connected to the contact terminal.

For the battery management circuit board 1121, it is a main component in a battery management system. In this example, the battery management circuit board 1121 may be a circuit board of the BMU, or may be a circuit board in which a circuit of the BMU and a circuit of the CSC are integrated. The battery management system may be provided with an outer shell and the battery management circuit board 1121 may be connected to the outer shell. Alternatively, the battery management system is not provided with an outer shell, and the battery management circuit board 1121 may be directly connected to the bearing member 11231 in the electrical connection assembly 1123.

The first connecting terminal 1122 is electrically connected to the battery management circuit board 1121. The first connecting terminal 1122 may be understood as an integrated metal conductive port structure or metal conductive interface structure. For example, the first connecting terminal 1122 may adopt a pin structure or a contact pin structure. The first connecting terminal 1122 may adopt a sheet-like, thread-like, wire-like, cylindrical metal that can realize electrical signal transmission. The first connecting terminal 1122 is made of a highly conductive material, such as copper, nickel, or aluminum. The first connecting terminal 1122 may be connected to the battery management circuit board 1121 by means of welding.

The electrical connection assembly 1123 is disposed between the relay 1124 and the battery management circuit board 1121. The electrical connection assembly 1123 is mainly used to collect an electrical signal on the relay 1124 or the busbar and transmit the electrical signal to the battery management circuit board 1121. The bearing member 11231 is used to bear the conductive component 11232 and the second connecting terminal 11233, and may be further used to bear the battery management circuit board 1121. The bearing member 11231 supports and fixes each component to play a bearing role.

The third connecting terminal 11240 is used to collect an electrical signal on each relay 1124. It can be seen that there is provided a plurality of third connecting terminals 11240, and one end of each third connecting terminals 11240 is correspondingly electrically connected and conducted to the conducting terminal 11241 on a different relay 1124, and the other end of each third connecting terminals 11240 is electrically connected and conducted to the conductive component 11232. The third connecting terminal 11240 may be made of a rigid metal material. The third connecting terminal 11240 may be in a sheet shape, a column shape, or the like. The third connecting terminal 11240 may be understood as a busbar structure, which can collect and transmit electrical signals. The third connecting terminal 11240 may use a copper material, a nickel material, an aluminum material, or the like. For example, the third connecting terminal 11240 may be a sheet-like copper bar structure.

The conductive component 11232 and the third connecting terminal 11240 may be understood as an electrical connection component. There may be provided a plurality of third connecting terminals 11240, and the conductive component 11232 is electrically connected and conducted to each third connecting terminal 11240, so that an electrical signal can be collected and transmitted. The conductive component 11232 may be understood as a conductive structure that integrates and transmits an electrical signal. For example, the conductive component 11232 may be a metal conductive structure with rigidity, and the conductive component 11232 may be prepared by using a copper material, a nickel material, an aluminum material, or the like. For example, the conductive component 11232 may be a copper bar structure.

When the conductive component 11232 is connected to the bearing member 11231, one way is that the conductive component 11232 is prepared as a whole, and the various transmission parts are connected, in which case the conductive component 11232 is first assembled with the bearing member 11231, and after the assembly is completed, the conductive component 11232 is subjected to operations such as slitting and circuit breaking, so that the various transmission parts are independent of each other; and the other way is that the conductive component 11232 is subjected to operations such as slitting and circuit breaking before being connected to the bearing member 11231, so that the various transmission parts on the conductive component 11232 are independent of each other, and then the conductive component 11232 is assembled with the bearing member 11231. The above two ways may be adaptively selected according to the convenience of specific operations.

The second connecting terminal 11233 is electrically connected to the conductive component 11232. The second connecting terminal 11233 may also be understood as an integrated metal conductive port structure or metal conductive interface structure. For example, the second connecting terminal 11233 may adopt a pin structure or a contact pin 11234 structure. The second connecting terminal 11233 may adopt a sheet-like, filamentous, wire-like, cylindrical metal member that can realize electrical signal transmission. The second connecting terminal 11233 is made of a highly conductive material, such as copper, nickel, or aluminum. The second connecting terminal 11233 may be connected to the conductive component 11232 by means of welding.

The second connecting terminal 11233 is electrically connected and conducted to the first connecting terminal 1122, so that signal transmission can be performed between the battery management circuit board 1121 and the electrical connection assembly 1123. A detachable connection mode may be used between the second connecting terminal 11233 and the first connecting terminal 1122, so as to facilitate installation and disassembly between the battery management circuit board 1121 and the electrical connection assembly 1123.

In this implementation, the collection and transmission of an electrical signal can be realized between the relay and the battery management circuit board 1121 through the electrical connection assembly 1123. The electrical connection assembly 1123 integrates the conductive component 11232 through the bearing member 11231. In the conductive component 11232, the second connecting terminal 11233 is communicated with the third connecting terminal 11240 through the conductive component 11232, and the first connecting terminal 1122 is connected to the second connecting terminal 11233 to realize the transmission of electrical signal, so that the overall structure of the electronic control device 1120 has a high integration level. The electrical connection assembly 1123 replaces the wire harness structure, making the overall structure simpler, neater, and more orderly, and improving the regularity of the structure.

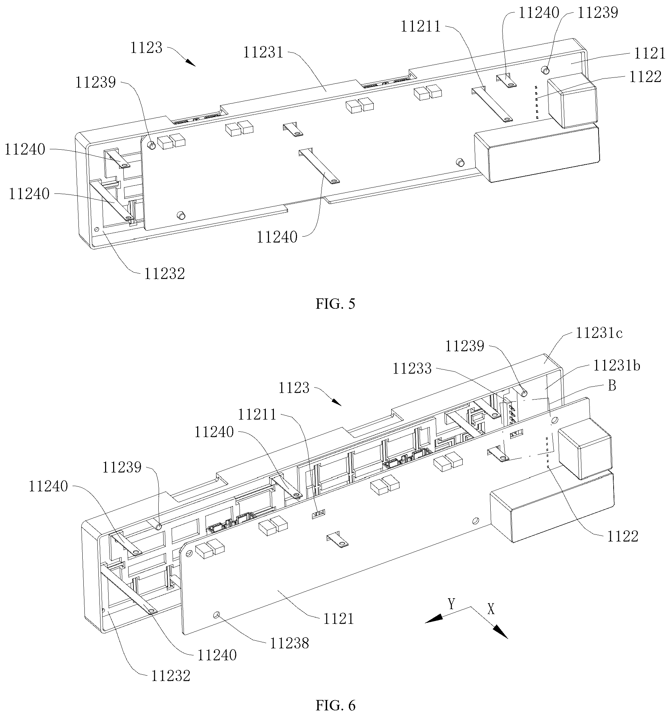

Referring to FIG. 5 and FIG. 6, in some embodiments, there is provided a plurality of third connecting terminals 11240, and each third connecting terminal 11240 extends from a position connected to the conductive component 11232 towards a direction away from the conductive component 11232.

Specifically, the third connecting terminal 11240 may be understood as a sheet-like busbar structure. The third connecting terminal 11240 can extend away from the conductive component 11232 by a certain length, and an extending end of the third connecting terminal 11240 can be electrically connected to the relay 1124.

Since the plurality of third connecting terminals 11240 are electrically connected to the conductive component 11232, it can be seen that the conductive component 11232 is used to transmit different electrical signals. Therefore, it may be evident that different transmission portions are formed on the conductive component 11232 corresponding to the third connecting terminals 11240, and the various transmission portions are independent of each other. The transmission portions may also be understood as independent electrical signal transmission paths formed on the conductive component 11232, thereby realizing the function of integrating and transmitting different electrical signals.

In this implementation, by providing a plurality of third connecting terminals 11240, electrical signals on different relays 1124 can be collected for independent transmission, and then transmitted to the battery management circuit board 1121 through the second connecting terminal 11233 to achieve the purpose of simultaneously monitoring the plurality of relays 1124.

Referring to FIGS. 5-7, in some embodiments, the second connecting terminal 11233 is configured to be plugged into the first connecting terminal 1122.

Since the second connecting terminal 11233 is plugged into and mated with the first connecting terminal 1122, it may be understood that one of the first connecting terminal 1122 and the second connecting terminal 11233 is a male terminal, and the other is a female terminal, thereby achieving plugging and conduction.

In this implementation, a connection mode of plugging can improve the convenience of the connection between the first connecting terminal 1122 and the second connecting terminal 11233.

Referring to FIGS. 6-8, in some embodiments, an elastic limiting portion 11236 is formed on the first connecting terminal 1122 or the second connecting terminal 11233 to enable an elastic limiting connection between the first connecting terminal 1122 and the second connecting terminal 11233.

The elastic limiting portion 11236 is used to perform limiting between the first connecting terminal 1122 and the second connecting terminal 11233 after the first connecting terminal 1122 is plugged into the second connecting terminal 11233, so that the first connecting terminal 1122 is not easily disengaged from the second connecting terminals 11233.

The elastic limiting portion 11236 is a structure capable of elastic expansion and contraction, so that the elastic limiting portion 11236 performs limiting between the first connecting terminal 1122 and the second connecting terminal 11233 in an elastic limiting manner. For example, the first connecting terminal 1122 is a male terminal formed with a contact pin 11234, the second connecting terminal 11233 is a female terminal formed with a plugging hole (or a conducting hole 11221). The elastic limiting portion 11236 may be made of an elastic material, or the elastic limiting portion 11236 is designed to be in a structural form capable of elastic expansion and contraction, so that the elastic limiting portion 11236 is disposed on the first connecting terminal 1122 or the second connecting terminal 11233. The elastic limiting portion 11236 can be elastically deformed between the contact pin 11234 and the plugging hole while the first connecting terminal 1122 is plugged into the second connecting terminal 11233. In a radial direction of the plugging hole, the elastic limiting portion 11236 can form a radial squeezing force on the plugging hole and the contact pin 11234, thereby achieving the purpose of frictionally limiting the first connecting terminal 1122 and the second connecting terminal 11233.

Due to the use of elastic limiting, it may be evident that with the help of an external force, the first connecting terminal 1122 can be disengaged from the second connecting terminal 11233 after overcoming the action of an elastic force, thereby realizing the detachable connection between the first connecting terminal 1122 and the second connecting terminal 11233.

In this implementation, by providing the elastic limiting portion 11236 to perform limiting between the first connecting terminal 1122 and the second connecting terminal 11233, the reliability of the connection between the first connecting terminal 1122 and the second connecting terminal 11233 is improved, and the detachable connection between the first connecting terminal 1122 and the second connecting terminal 11233 can be realized more conveniently.

Referring to FIGS. 6-8, in some embodiments, the second connecting terminal 11233 comprises a plurality of contact pins 11234, and each contact pin 11234 comprises a base portion 11235, an elastic limiting portion 11236 connected to the base portion 11235, and a plug pin portion 11237 connected to the elastic limiting portion 11236. The base portion 11235 is electrically connected to the conductive component 11232, and the elastic limiting portion 11236 is elastically contractile. A conducting hole 11221 is formed on the first connecting terminal 1122. Each elastic limiting portion 11236 is correspondingly plugged and limited in the conducting hole 11221, and the plug pin portion 11237 is electrically connected to a hole wall of the conducting hole 11221.

The base portion 11235 may be considered as a main body structure portion of the second connecting terminal 11233, and the base portion 11235 may be used to connect or bear the elastic limiting portion 11236. The base portion 11235 may be made of a conductive metal material. For example, the base portion 11235 may adopt a structural form such as a copper sheet or a copper pillar. The base portion 11235 may be provided with two opposite connecting ends, one of the connecting ends is electrically connected to a conductive portion on the conductive component 11232, and the other connecting end is connected to the elastic limiting portion 11236. The elastic limiting portion 11236 may be an elastic structure capable of conducting electricity. The design of the structural form enables the elastic limiting portion 11236 to be elastically deformed in a radial direction of the conducting hole 11221, and the elastic limiting portion 11236 can be contracted and expanded in the radial direction of the conducting hole 11221. The elastic limiting portion 11236 is squeezed into the conducting hole 11221 while the first connecting terminal 1122 is plugged into the second connecting terminal 11233. In the radial direction of the conducting hole 11221, a radial squeezing force is formed between the elastic limiting portion 11236 and the conducting hole 11221, thereby achieving the purpose of enabling frictional limiting between the first connecting terminal 1122 and the second connecting terminal 11233.

The plug pin portion 11237 is connected to the end of the elastic limiting portion 11236 away from the base portion 11235. The plug pin portion 11237 is made of a conductive metal material. The plug pin portion 11237 may adopt a sheet-like or columnar structure or the like. The plug pin portion 11237, the elastic limiting portion 11236, and the base portion 11235 can conduct electricity. The plug pin portion 11237, the elastic limiting portion 11236, and the base portion 11235 may adopt an integrally formed metal conductive structure. The plug pin portion 11237 is electrically connected to the hole wall of the conducting hole 11221, and it may be evident that the conducting hole 11221 is a conductive connection surface of the first connecting terminal 1122, and therefore, the pin portion 11237 is in contact with the hole wall of the conducting hole 11221 to realize electrical connection and conduction between second connecting terminal 11233 and the first connecting terminal 1122.

In this implementation, the elastic limiting portion 11236 is disposed on the second connecting terminal 11233, the plug pin portion 11237 is used to be directly electrically connected to the hole wall of the conducting hole 11221, and the base portion 11235 may bear the elastic limiting portion 11236 and the plug pin portion 11237, so as to enable the entire second connecting terminal 11233 to be elastically limited to each other while being electrically connected to the first connecting terminal 1122, resulting in a simple and compact structure and a reliable connection.

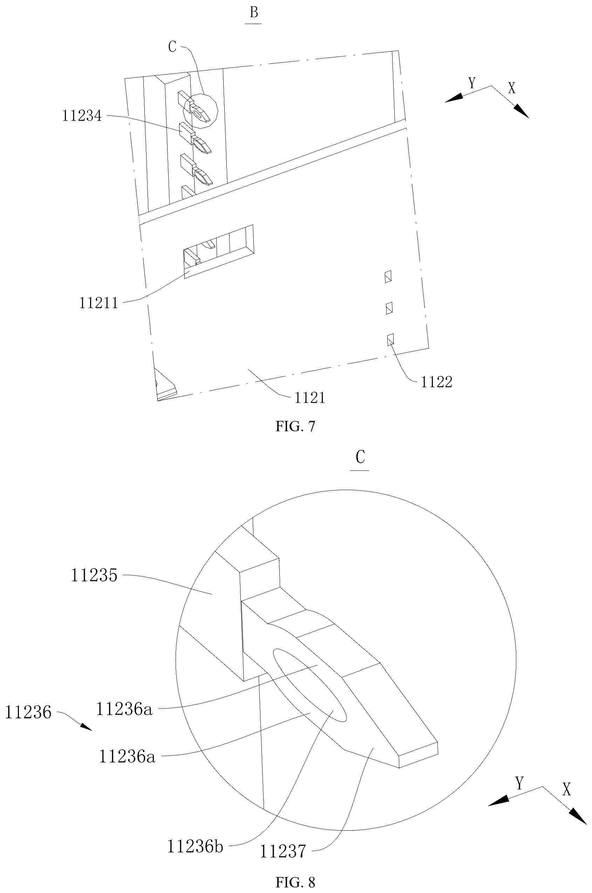

Referring to FIG. 7 and FIG. 8, in some embodiments, the elastic limiting portion 11236 comprises two elastic arms 11236a connected between the base portion 11235 and the plug pin portion 11237. The two elastic arms 11236a are disposed facing each other and form an elastic contraction space 11236b.

The elastic arm 11236a may be understood as a sheet-like structure with a certain extension length. Two sheet-like structures are disposed facing each other, which may be understood as being disposed opposite to each other, and the two elastic arms 11236a are spaced apart from each other and form a spacing space, which is the elastic contraction space 11236b. Thus, it may be understood that the extension trajectories (or shapes) of the two elastic arms 11236a in a length direction are in the shape of a curve, for example, the elastic arms 11236a are arc-shaped, and the two elastic arms 11236a protrude outwards and bend in the directions facing away from each other, so as to form the elastic contraction space 11236b between the two elastic arms 11236a.

The elastic deformation comprises contraction deformation and expansion deformation. When the elastic limiting portion 11236 is elastically contracted, the hole wall of the conducting hole 11221 squeezes the two elastic arms 11236a towards the middle, so that the outward protruding positions of the two elastic arms 11236a bend and deform toward the middle of the elastic contraction space 11236b, the elastic contraction space 11236b is reduced, and an elastic squeezing force is formed between the elastic arms 11236a and the hole wall of the conducting hole 11221 to limit the second connecting terminal 11233; after the elastic limiting portion 11236 is disengaged from the conducting hole 11221, the two elastic arms 11236a expand and deform in the directions facing away from each other, and the elastic contraction space 11236b is increased.

The elastic contraction space 11236b may be understood as a hole cavity of a hole structure formed between the two elastic arms 11236a. The two elastic arms 11236a are subjected to a squeezing force and deformed, and the space of the hole cavity increases and decreases accordingly, thereby realizing the elastic deformation of the elastic limiting portion 11236.

Since the elastic limiting portion 11236 is connected between the base portion 11235 and the plug pin portion 11237, it can be seen that one end of each elastic arm 11236a is connected to the base portion 11235, the other end is connected to the plug pin portion 11237, and the base portion 11235, the plug pin portion 11237, and the two elastic arms 11236a may adopt an integrated structure.

In this implementation, the elastic limiting portion 11236 adopts a structural form of two elastic arms 11236a that can face towards or away from each other, which is simple in structure, easy to manufacture, and capable of providing sufficient elastic squeezing force, making the limiting between the first connecting terminal 1122 and the second connecting terminal 11233 more reliable and the plugging and unplugging more convenient.

Referring to FIGS. 6-9, in some embodiments, the conductive component 11232 is disposed opposite to the battery management circuit board 1121 in a first direction X, the plug pin portion 11237 extends in the first direction X, and a central axis of the conducting hole 11221 is parallel to the first direction X.

The conductive component 11232 being disposed opposite to the battery management circuit board 1121 in the first direction X means that, in the first direction X, the conductive component 11232 and a battery main control board are distributed at both ends of the first direction X. For example, the conductive component 11232 and the battery management circuit board 1121 are both sheet-shaped, and the first direction X is a direction perpendicular to the conductive component 11232 and the battery management circuit board 1121.

The plug pin portion 11237 extends in the first direction X to form a columnar or needle-like structure, and the direction of the central axis of the conducting hole 11221 is parallel to the first direction X. It may be evident that the plug pin portion 11237 is plugged into the conducting hole 11221 in the first direction X. It may be understood that the plug pin portion 11237 may be located on a surface of the conductive component 11232 opposite to the battery management circuit board 1121, and correspondingly, the conducting hole 11221 is provided on a surface of the battery management circuit board 1121 opposite to the conductive component 11232, so that the battery management circuit board 1121 moves toward the third connecting terminal 11240 along the first direction X, and the plug pin portion 11237 may be correspondingly plugged into the conducting hole 11221. The above pairing method may be understood as the front plugging and assembly of the battery management circuit board 1121 and the conductive component 11232.

In this implementation, the extension direction of the contact pin 11234 is allowed to be the same as a direction in which the battery management circuit board 1121 is disposed opposite to the conductive component 11232, so as to facilitate the direct plugging between the battery management circuit board 1121 and the conductive component 11232 to facilitate the improvement of the convenience of plugging and pairing between the first connecting terminal 1122 and the second connecting terminal 11233.

Various ways may be used for the connection between the conductive component 11232 and the bearing member 11231, and one realizable connection manner is that the conductive component 11232 and the bearing member 11231 are injection-molded into an integral structure.

Specifically, the bearing member 11231 may be injection molded by using an injection molding machine. Before the bearing member 11231 is injection molded in the injection molding machine, the conductive component 11232 may be placed in an injection mold of the injection molding machine, and the raw material of the bearing member 11231 is injected into the injection molding machine, so that the bearing member 11231 and the conductive component 11232 are integrally injection-molded.

The use of an integral injection molding method can enhance the connection strength between the conductive component 11232 and the bearing member 11231, and improve the reliability of the connection between the two.

Another realizable connection manner is that the conductive component 11232 and the bearing member 11231 are welded into an integrated structure.

Specifically, the conductive component 11232 is made of a conductive metal material, the main body structure of the bearing member 11231 may be made of a non-metal material, and a metal portion may be further connected to the bearing member 11231, so that the conductive component 11232 is welded and fixed to the metal portion on the bearing member 11231.

The use of welding makes the connection between the conductive component 11232 and the bearing member 11231 more convenient and reliable.

Yet another realizable connection manner is that the conductive component 11232 is bonded to the bearing member 11231.

Specifically, the conductive component 11232 is provided with a first bonding surface, the bearing member 11231 is provided with a second bonding surface opposite to the first bonding surface, and a bonding colloid is disposed between the first bonding surface and the second bonding surface to fix the conductive component 11232 and the bearing member 11231.

The use of bonding is more convenient, less likely to destroy the structures of the conductive component 11232 and the bearing member 11231, and saves costs. In order to improve the connection strength between the conductive component 11232 and the bearing member 11231, the number of bonding colloids, the bonding area, and the like may be increased, thereby increasing the number and area of the connection positions between the conductive component 11232 and the bearing member 11231.

Still another realizable connection manner is that the conductive component 11232 is connected to the bearing member 11231 via a fastening assembly.

Specifically, the fastening assembly may be a combination of one or more of a bolt assembly, a riveting assembly, a snap assembly, etc. For example, the fastening assembly is a bolt assembly, and correspondingly, both the conductive component 11232 and the bearing member 11231 may be provided with a through hole or a threaded hole, and the fastening assembly limits and fixes the conductive component 11232 and the bearing member 11231 through threaded connection.

The use of the fastening assembly for connection makes the assembly between the conductive component 11232 and the bearing member 11231 more flexible, and makes it possible to realize the detachable connection between the conductive component 11232 and the bearing member 11231, thereby facilitating later separate maintenance and replacement, which is conducive to reducing maintenance costs.

Various ways may be used for the connection between the conductive component 11232 and the third connecting terminal 11240, and one realizable connection manner is that the conductive component 11232 and the third connecting terminal 11240 are injection-molded into an integrated structure.

Specifically, the conductive component 11232 and the third connecting terminal 11240 may be injection-molded by using an injection molding machine. By designing a mold of the injection molding machine, the conductive component 11232 and the third connecting terminal 11240 may be injection-molded into an integrated structure in one casting.

The use of the integral injection molding method may reduce the assembly process between the conductive component 11232 and the bearing member 11231, and can enhance the connection strength between the conductive component 11232 and the bearing member 11231, and improve the reliability of the connection between the two.

Another realizable connection manner is that the conductive component 11232 and the third connecting terminal 11240 are welded into an integrated structure.

Specifically, the conductive component 11232 is made of a conductive metal material, and the third connecting terminal 11240 is also made of a conductive metal material. Therefore, the conductive component 11232 may be directly welded to the third connecting terminal 11240, and deburring, polishing, etc. can be performed at the welding position, which is conducive to reducing the overcurrent resistance.

The use of welding makes the connection between the conductive component 11232 and each third connecting terminal 11240 more convenient and reliable.

Yet another realizable connection manner is that the conductive component 11232 is connected to the third connecting terminal 11240 via a fastening assembly.

Specifically, the fastening assembly may be a combination of one or more of a bolt assembly, a riveting assembly, a snap assembly, etc. For example, the fastening assembly is a bolt assembly, and correspondingly, both the conductive component 11232 and the third connecting terminal 11240 may be provided with a through hole or a threaded hole, and the fastening assembly limits and fixes the conductive component 11232 and the third connecting terminal 11240 through threaded connection.

The use of the fastening assembly for connection makes the assembly between the conductive component 11232 and the third connecting terminal 11240 more flexible, and makes it possible to realize the detachable connection between the conductive component 11232 and each third connecting terminal 11240, thereby facilitating later separate maintenance and replacement, which is conducive to reducing maintenance costs.

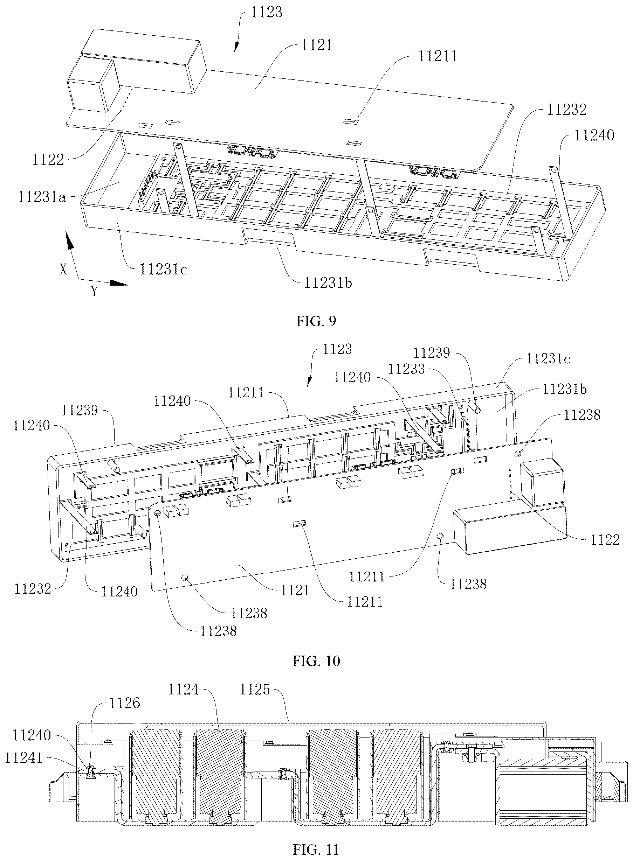

Referring to FIG. 9, in some embodiments, the bearing member 11231 is provided with a receiving groove 11231a in which the conductive component 11232 is received, one end of each third connecting terminal 11240 is connected to the conductive component 11232, and the other end protrudes outside a groove opening of the receiving groove 11231a.

The bearing member 11231 may adopt a frame structure or a shell structure, which is beneficial to reduce the weight of the bearing member 11231 itself. Taking the bearing member 11231 adopting the shell structure as an example, the bearing member 11231 comprises an outer shell which forms the receiving groove 11231a through enclosure. The conductive component 11232 is connected to the bearing member 11231 and located in the receiving groove 11231a. For example, the conductive component 11232 may be fitted and connected to the bottom of the receiving groove 11231a.

Each third connecting terminal 11240 may adopt a sheet-like or columnar structure with a preset length. One end of each third connecting terminal 11240 extends into the receiving groove 11231a and is connected to the conductive component 11232, and the other end of each third connecting terminal 11240 extends from the groove opening of the receiving groove 11231a to the outside of the receiving groove 11231a to form an end which protrudes outside the receiving groove 11231a and is used be connected and conducted to the conducting terminal 11241 on the relay 1124. An extending direction of each third connecting terminal 11240 may be parallel to a direction of the groove depth.

In this implementation, the conductive component 11232 is received in the receiving groove 11231a formed on the bearing member 11231, so that the bearing member 11231 plays a role in covering and protecting the conductive component 11232.

Referring to FIG. 9 and FIG. 10, in some embodiments, the bearing member 11231 comprises a bottom plate 11231b and a vertical plate 11231c connected in a circumferential direction of the bottom plate 11231b through enclosure. The bottom plate 11231b and the vertical plate 11231c jointly form the receiving groove 11231a through enclosure, and the conductive component 11232 is fitted and connected to the bottom plate 11231b.

Specifically, the bearing member 11231 adopts a shell plate structure, and the bottom plate 11231b is mainly used to connect the conductive component 11232 to bear the conductive component 11232. The vertical plate 11231c is connected to an outer periphery of the bottom plate 11231b through enclosure to form the receiving groove 11231a. The vertical plate 11231c provides protection for the conductive component 11232 in the circumferential direction. The second connecting terminal 11233 is connected to the conductive component 11232 and is received in the receiving groove 11231a, and the vertical plate 11231c also provides protection for the second connecting terminal 11233.

When the first connecting terminal 1122 is paired with and plugged into the second connecting terminal 11233, the battery management circuit board 1121 is received in the receiving groove 11231a, so that the vertical plate 11231c can also protect the battery management circuit board 1121.

In this implementation, the bearing member 11231 adopts a shell plate structure, with the bottom plate 11231b supporting the conductive component 11232 and the vertical plate 11231c being enclosed in the circumferential direction of the bottom plate 11231b to form the receiving groove 11231a. The vertical plate 11231c can provide circumferential protection for each component. The bearing member 11231 adopts a shell plate structure, which is simple in structure, easy to manufacture, and convenient to ensure the lightweight of the electronic control device 1120.

Referring to FIGS. 4-6 and 9, in some embodiments, the battery management circuit board 1121 is disposed opposite to the conductive component 11232, the battery management circuit board 1121 is located on one side of the groove opening of the receiving groove 11231a, and the battery management circuit board 1121 is provided with a through hole 11211 for avoiding the third connecting terminal 11240.

The outer shape of the conductive component 11232 may be sheet-like. When the battery management circuit board 1121 is connected to the bearing member 11231, the battery management circuit board 1121 is disposed opposite to the conductive component 11232. Each third connecting terminal 11240 outwardly protrudes and extends from the conductive component 11232 toward the groove opening of the receiving groove 11231a. The battery management circuit board 1121 being located on one side of the groove opening of the receiving groove 11231a means that the battery management circuit board 1121 may be located at the groove opening of the receiving groove 11231a, or the battery management circuit board 1121 may be received in the receiving groove 11231a through the groove opening, so that the conductive component 11232 can form an opposite positional relationship with the battery management circuit board 1121. The receiving groove 11231a also plays a role of receiving the battery management circuit board 1121 to save space. Thus, it may be evident that the battery management circuit board 1121 needs to avoid the third connecting terminal 11240 interfering therewith.

The avoidance method is to provide through holes 11211 on the battery management circuit board 1121. The number of the through holes 11211 should be equal to the number of the third connecting terminals 11240 that would interfere with the battery management circuit board 1121. The number of the through holes 11211 is less than or equal to the number of the third connecting terminals 11240. One third connecting terminal 11240 is plugged into one through hole 11211, that is, there is a problem that a certain number of third connecting terminals 11240 may not interfere with the battery management circuit board 1121. For example, the length dimension of the battery management circuit board 1121 is less than the length of the conductive component 11232. Six third connecting terminals 11240 are provided, and the extending ends of two of the six third connecting terminals 11240 do not interfere with the battery management circuit board 1121, and thus, the two third connecting terminals 11240 do not need to be plugged into and mated with the battery management circuit board 1121; and corresponding to the other four third connecting terminals, four through holes 11211 are correspondingly provided on the battery management circuit board 1121, and each third connecting terminal 11240 is plugged into and mated with each through hole 11211 in one to-one correspondence.

There should be no electrical connection and conduction between the battery management circuit board 1121 and each third connecting terminal 11240, so the hole wall of the through hole 11211 and a region near the hole wall need to be insulated, so that the through hole 11211 is an insulating hole. For example, the hole wall of the insulating hole is coated or connected with an insulating layer, so that after the third connecting terminal 11240 is penetrated into the through hole 11211, the insulating layer plays an insulating role, so as to achieve the purpose of insulating each third connecting terminal 11240 from the hole wall of the through hole 11211.

In this implementation, the conductive component 11232 is disposed opposite to the battery management circuit board 1121 on one side of the groove opening of the receiving groove 11231a. By providing a through hole 11211 on the battery management circuit board 1121, the function of causing the third connecting terminal 11240 to avoid the battery management circuit board 1121 can be achieved, thereby making the assembly structure between the battery management circuit board 1121 and the third connecting terminal 11240 more compact, which is conducive to improving space utilization.

Referring to FIG. 5 and FIG. 6, in some embodiments, the electronic control device 1120 further comprises a first positioning structure 11238 connected to the battery management circuit board 1121 and a second positioning structure 11239 connected to the bearing member 11231, and the first positioning structure 11238 is plugged into and mated with the second positioning structure 11239.

Since the battery management circuit board 1121 needs to be assembled with the bearing member 11231, so that the first connecting terminal 1122 can be plugged into and mated with the second connecting terminal 11233, in order to improve the accuracy of positioning between the first connecting terminal 1122 and the second connecting terminal 11233, installation positioning needs to be performed between the battery management circuit board 1121 and the bearing member 11231.

Specifically, the first positioning structure 11238 is configured on the battery management circuit board 1121, the second positioning structure 11239 is configured on the bearing member 11231, and when the battery management circuit board 1121 is connected to the bearing member 11231, the first positioning structure 11238 can be plugged into and mated with the second positioning structure 11239 to achieve the function of positioning and limiting.

Any one of the first positioning structure 11238 and the second positioning structure 11239 may be a protrusion structure, and correspondingly, the other one is a groove structure, and the protrusion structure is plugged into and mated with the groove structure for positioning. The protrusion structure may be columnar. Multiple groups of first positioning structures 11238 and second positioning structures 11239 may be formed, thereby improving the accuracy of positioning.

In this implementation, the provision of the first positioning structure 11238 and the second positioning structure 11239 is beneficial to improve the accuracy of the assembly between the battery management circuit board 1121 and the bearing member 11231, and further improve the accuracy of pairing of the first connecting terminal 1122 and the second connecting terminal 11233.

Referring to FIG. 9 and FIG. 10, in some embodiments, the conductive component 11232 is arranged to extend in a second direction Y, the second connecting terminal 11233 is located at one extending end of the conductive component 11232, and the plurality of third connecting terminals 11240 are arranged at intervals in the second direction Y.

The conductive component 11232 may be sheet-like. For example, the conductive component 11232 adopts a copper bar structure. The second direction Y is a length direction of the conductive component 11232. The second connecting terminal 11233 is allowed to be connected to one extending end of the conductive component 11232, that is, the second connecting terminal 11233 is located at one end of the conductive component 11232 in the length direction or at the position near the end, so as to reduce the interference problem between the second connecting terminal 11233 and other electrical devices, which is beneficial to the reasonable use of space.

The plurality of third connecting terminals 11240 are arranged at intervals in the second direction Y. Therefore, it may be evident that the plurality of relays 1124 are correspondingly arranged at intervals in the second direction Y. The electrical signals on the plurality of relays 1124 at different positions may be collected through the third connecting terminals 11240 connected to the conducting terminals 11241 thereon, the decentralized third connecting terminals 11240 transmit the electrical signals to the conductive component 11232 in a centralized manner, and the conductive component 11232 respectively transmits the electrical signals and converges same to the second connecting terminals 11233. The third connecting terminals 11240 achieve the purpose of decentralized collection and centralized transmission, and the centralized second connecting terminals 11233 are provided to facilitate electrical connection and pairing.

In this implementation, the second connecting terminal 11233 is disposed at one extending end of the conductive component 11232, thereby facilitating avoiding a middle region to reduce interference with other electrical components, making the space arrangement more reasonable, and helping to improve space utilization.

Referring to FIG. 3, FIG. 4, and FIG. 11, in some embodiments, the relay 1124 is provided with a conducting terminal 11241, and the electronic control device 1120 comprises a locking assembly 1126 which is connected between the conducting terminal 11241 and the third connecting terminal 11240.

The conducting terminal 11241 is a conductive portion on the relay 1124. An electrical connection and conduction needs to be performed between the conducting terminal 11241 and the third connecting terminal 11240. The conducting terminal 11241 and the third connecting terminal 11240 may adopt various ways for connection, such as welding, threaded connection, and snap locking. In this example, by adding the locking assembly 1126, the locking assembly 1126 is allowed to be connected between the conducting terminal 11241 and the third connecting terminal 11240, thereby realizing the detachable connection between the conducting terminal 11241 and the third connecting terminal 11240.

Specifically, the conducting terminal 11241 may have a sheet-like portion which may be provided with a connecting hole, and correspondingly, a sheet-like structure is also formed at the end of the third connecting terminal 11240, which is correspondingly provided with a connecting hole. The sheet-like portion of the conducting terminal 11241 is fitted and overlapped with the sheet-like structure at the end of the third connecting terminal 11240, and the connecting holes are correspondingly configured. The locking assembly 1126 comprises a stud portion and a nut portion. The stud portion is correspondingly plugged into the connecting hole, and the nut portion is in threaded connection with an outward extending end of the stud portion. Here, the nut portion may be an independently movable component, or the nut portion may be integrally connected to the conducting terminal 11241 or the third connecting terminal 11240.

In this implementation, the conducting terminal 11241 is connected to the third connecting terminal 11240 by means of the locking assembly 1126, thereby facilitating detachment between the third connecting terminal 11240 and the conducting terminal 11241 for later maintenance and replacement of various components, and making it more convenient and flexible to use.

The main reason for which the battery performs high voltage sampling is to ensure the safety and performance of the battery.

High-voltage sampling refers to measuring and monitoring a high-voltage battery in a battery module, and protecting the high-voltage battery from overvoltage/undervoltage. The high-voltage battery generally refers to a battery pack formed by connecting single batteries in series, and a voltage thereof ranges generally from 100V to 1000V or more. The main purpose of high-voltage sampling is to protect the battery from damage caused by overvoltage and undervoltage, and ensure that the battery operates within a safe working range.

High-voltage sampling plays a vital role in battery management system. Through high-voltage sampling, parameters such as the voltage and current of the battery may be monitored in real time, and abnormal situations may be discovered and handled in time, thereby preventing battery damage or safety accidents. For example, when the battery voltage is too high or too low, a high-voltage sampling system will automatically take protective measures to avoid over-charging or over-discharging of the battery, thereby prolonging the service life of the battery.

In addition, the specific implementation of high-voltage sampling also affects its effect. For example, using resistive voltage division for voltage sampling is a common method, in which the voltage is divided by connecting a plurality of resistors in series, and then a total voltage value is obtained by conversion. Although this method is simple, it is necessary to ensure the accuracy and stability of the resistors to avoid measurement errors.

Therefore, the electronic control device 1120 of the present application may be used for high-voltage sampling, and the conducting terminal 11241 connected to the relay 1124 may be a high-voltage terminal. For example, the relay adopts a high-voltage relay, the conducting terminal 11241 connected to the high-voltage relay is a high-voltage terminal, and the high-voltage terminal is electrically connected to the third connecting terminal 11240 through the locking assembly 1126 to complete the collection and delivery of high voltage. Thus, the wire harness connection is replaced, and the simplification of parts is achieved, and the structure of the electronic control device 1120 is made more regular, which is beneficial to save more space, improve space utilization of the battery device 1100, and improve the compactness of the battery device 1100, thereby facilitating the reduction of the failure probability of the electrical connection between the components.

Of course, the conducting terminal 11241 may also adopt a low-voltage terminal for low-voltage sampling.

Referring to FIG. 3, FIG. 4, and FIG. 11, in some embodiments, the electronic control device 1120 further comprises a base assembly 1125 which is provided with a plurality of mounting grooves 11251. Each relay 1124 is correspondingly mounted in each mounting groove 11251, and the mounting groove 11251 plays a role of receiving, supporting, and limiting the relay 1124.

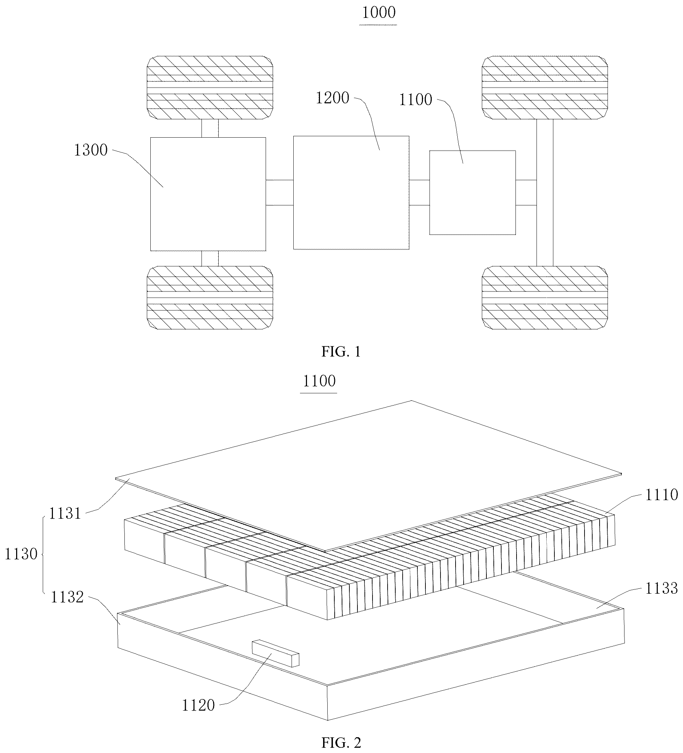

In one specific implementation, referring to FIGS. 1-11, the electronic control device 1120 comprises a battery management circuit board 1121 and an electrical connection assembly 1123, where the battery management circuit board 1121 is provided with a first connecting terminal 1122 which is electrically connected to an internal circuit of the battery management circuit board 1121; and the electrical connection assembly 1123 comprises a bearing member 11231 and a conductive component 11232 which is connected to the bearing member 11231. The conductive component 11232 comprises a conductive component 11232, a second connecting terminal 11233, and a third connecting terminal 11240. The second connecting terminal 11233 is communicated with the third connecting terminal 11240 through the conductive component 11232. The second connecting terminal 11233 is connected to the first connecting terminal 1122. The third connecting terminal 11240 is used to connect a busbar or a relay 1124 inside the electronic control device. A plurality of third connecting terminals 11240 are provided, and each third connecting terminal 11240 extends from a position connected to the conduction component 11232 towards a direction away from the conductive component 11232. The second connecting terminal 11233 is configured to be plugged into the first connecting terminal 1122. An elastic limiting portion 11236 is formed on the first connecting terminal 1122 or the second connecting terminal 11233 to enable an elastic limiting connection between the first connecting terminal 1122 and the second connecting terminal 11233. The second connecting terminal 11233 comprises a plurality of contact pins 11234, and each contact pin 11234 comprises a base portion 11235, the elastic limiting portion 11236 connected to the base portion 11235, and a plug pin portion 11237 connected to the elastic limiting portion 11236. The base portion 11235 is electrically connected to the conductive component 11232, and the elastic limiting portion 11236 is elastically deformable. A plurality of conducting holes 11221 are formed on the first connecting terminal 1122. Each elastic limiting portion 11236 is correspondingly plugged and limited in each conducting hole 11221. The plug pin portion 11237 is electrically connected to a hole wall of the conducting hole 11221. The elastic limiting portion 11236 comprises two elastic arms 11236a connected between the base portion 11235 and the plug pin portion 11237, and the two elastic arms 11236a are disposed facing each other and form an elastic contraction space 11236b. The conductive component 11232 and the bearing member 11231 are injection molded into an integrated structure. The conductive component 11232 and the third connecting terminal 11240 are welded into an integrated structure, or the conductive component 11232 is connected to the third connecting terminal 11240 by means of a fastening assembly. The bearing member 11231 is provided with a receiving groove 11231a in which the conductive component 11232 is received. One end of each third connecting terminal 11240 is connected to the conductive component 11232, and the other end protrudes outside a groove opening of the receiving groove 11231a. The battery management circuit board 1121 is disposed opposite to the conductive component 11232, the battery management circuit board 1121 is located on one side of the groove opening of the receiving groove 11231a, and the battery management circuit board 1121 is provided with a through hole for avoiding the third connecting terminal 11240. The electronic control device 1120 further comprises a first positioning structure 11238 connected to the battery management circuit board 1121 and a second positioning structure 11239 connected to the bearing member 11231, and the first positioning structure 11238 is configured to be plugged into and mated with the second positioning structure 11239. The electronic control device 1120 comprises a locking assembly 1126 which is connected between the conducting terminal 11241 and the third connecting terminal 11240.

According to some embodiments of the present application, the present application further provides a battery device 1100, comprising a battery cell assembly 1110 and the electronic control device 1120 in the above embodiments, where the battery cell assembly 1110 is electrically connected to the electronic control device 1120, one or more battery cell assemblies 1110 are provided, and the battery cell assembly 1110 comprises one or more battery cells. The battery device 1100 disclosed in the embodiments of the present application can be used in an electric device which uses the battery device 1100 as a power supply or various energy storage devices and energy storage systems which use the battery device 1100 as an energy storage element.

The battery cell refers to a minimum unit constituting the battery device 1100. Here, each battery cell may be a secondary battery cell or a primary battery cell, or may be a lithium-sulfur battery cell, a sodium-ion battery cell, or a magnesium-ion battery cell, but is not limited thereto. The battery cell may be in the shape of a cylinder, a flat body, a cuboid, or the like.

The battery device 1100 may further comprise a box body 1130 for providing a receiving space 1133 for the battery cell assembly 1110 and the electronic control device 1120. The battery cell assembly 1110 and the electronic control device 1120 may both be received in the receiving space 1133 of the box body 1130. The box body 1130 may adopt various structures. For example, the box body 1130 may comprise a first portion 1131 and a second portion 1132, where the first portion 1131 and the second portion 1132 cover each other, and jointly define a receiving space 1133 for accommodating the battery cell assembly 1110. The second portion 1132 may be a hollow structure with an opening at one end, the first portion 1131 may be a plate-shaped structure, and the first portion 1131 covers an opening side of the second portion 1132, so that the first portion 1131 and the second portion 1132 jointly define the receiving space 1133. The first portion 1131 and the second portion 1132 each may be a hollow structure with an opening at one end, and an opening side of the first portion 1131 covers an opening side of the second portion 1132. Certainly, the box body 1130 formed by the first portion 1131 and the second portion 1132 may be in various shapes such as a cylinder, a cuboid, and the like.

According to some embodiments of the present application, the present application further provides an energy storage device, comprising a power conversion device and the energy storage device in the above embodiments, where the power conversion device is used to electrically connect a power generation device and the energy storage device.

Specifically, the energy storage device may comprise one or more battery clusters to increase the voltage and capacity of the energy storage device. The battery cluster may comprise a plurality of battery devices 1100 which are connected in series via a bus component to increase the voltage of the energy storage device. When the energy storage device comprises a plurality of battery clusters, the plurality of battery clusters are connected in parallel to increase the capacity of the energy storage device.

The energy storage device may be used in an energy storage power station, a wind power generation system, a solar power generation system, a mobile power system, a temporary power supply system, or the like. The energy storage device can store electrical energy as needed and output electrical energy at the appropriate time. For example, the energy storage device may store electric energy during periods of low power consumption, and provide electric energy for the relevant user or the electric apparatus during periods of peak power consumption. The energy storage system provided in the embodiments of the present application may be any power system that needs to use the energy storage device.

In some embodiments, the energy storage device is an energy storage container or an energy storage electric cabinet.

In some embodiments, the energy storage device may comprises a cabinet body and one or more battery clusters which are accommodated in the cabinet body.

In some embodiments, the energy storage device may comprise modules such as a thermal management module, a main control module, a general control module, a power distribution module, a fire protection module, etc.

As an example, the thermal management module may comprise a liquid cooling unit, and the liquid cooling unit provides a cooling liquid for adjusting the temperature of the battery cell to each battery device 1100 through a pipeline.

As an example, the main control module may be used as a battery management unit of the battery cluster to monitor and manage the battery cluster. The main control module may monitor information such as the current, voltage, power, or temperature of the battery cluster. For example, the charging and discharging current, voltage, and the like of the battery cluster may be controlled. The main control module comprises modules such as a slave battery management unit (SBMU) and a fusion switch.

As an example, the general control module may be used as a battery management unit of the energy storage device to monitor and manage the energy storage device. The general control module may monitor information such as the current, voltage, power, state of charge, or temperature of the energy storage device. For example, the charging and discharging current, voltage, and the like of the energy storage device may be controlled. As an example, the general control module comprises modules such as an insulation monitoring module (IMM), a master battery management unit (MBMU), an EtherNet (ETH), and a fiber optic conversion module.

As an example, the fire protection module comprises a control panel, a detector, an alarm device, and the like, and is used to perform detection, alarming, or extinguishment on the energy storage system.

As an example, the power distribution module may be used to distribute power to a module that requires power in the energy storage device.

According to some embodiments of the application, the present application further provides an energy storage system, comprising a power conversion device and the energy storage device in the above embodiments, where the power conversion device is used to electrically connect a power generation device and the energy storage device.

In some embodiments, the energy storage system may comprise one or more energy storage devices and a power converter system (PCS) which is used for being connected between the power generation system and the energy storage device. The power generation device is used to generate electrical energy, and the electrical energy generated by the power generation device may be stored in the energy storage device through the power converter system. As an example, the power generation device may be specifically a solar panel, a hydro power generation device, a thermal power generation device, a wind power generation device, or the like. Here, the specific type of the power generation device is not limited in the present application.

According to some embodiments of the present application, referring to FIG. 1, the present application further provides an electric device, comprising the battery device 1100 in the above embodiments, the energy storage device in the above embodiments, or the energy storage system in the above embodiments, where the battery device 1100 is used to store or provide electric energy.

The technical solutions described in the embodiments of the present application are all applicable to various electric devices using battery cells, for example, a mobile phone, a portable device, a notebook computer, an electric vehicle, an electric toy, an electric tool, a vehicle 1000, a ship, and a spacecraft, and for example, the spacecraft comprises an aircraft, a rocket, a space shuttle, and a spacecraft.

To facilitate description, in this embodiment, as an example for description, an electric device in an embodiment of the present application is a vehicle 1000.

Referring to FIG. 1, FIG. 1 is a schematic structural diagram of a vehicle 1000 provided in some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. Inside the vehicle 1000, a battery device 1100 is provided, which may be provided at the bottom, head, or tail of the vehicle 1000. The battery device 1100 may be used to power the vehicle 1000, for example, the battery device 1100 may be used as an operating power source of the vehicle 1000. The vehicle 1000 may further comprise a controller 1200 and a motor 1300, where the controller 1200 is used to control the battery device 1100 to power the motor 1300, for example, for a working power requirement of the vehicle 1000 during starting, navigating, and driving.

In some embodiments of the present application, the battery device 1100 may be used not only as the operating power source of the vehicle 1000, but also as a driving power source of the vehicle 1000, instead of or partially instead of fuel or natural gas to provide driving power for the vehicle 1000.

The example of the electric device in the present application is based on the example of the battery device 1100 described above, and the example of the electric device comprises all the technical effects of the example of the battery device 1100 described above, which will not be repeated.

According to some embodiments of the present application, the present application further provides a charging network, comprising a charging pile and the energy storage device in the above embodiments or the energy storage system in the above embodiments, where the energy storage device is used to provide electric energy for the charging pile.

For example, the charging network comprises a charging pile and the energy storage device, where the charging pile is electrically connected to the energy storage device, and the energy storage device is used to provide electric energy for the charging pile. The charging pile is electrically connected to the battery device 1100 in the energy storage device via a cable, and the battery device 1100 may provide electric energy stored by itself to the charging pile. The charging pile is provided with one or more connectors which are used to be connected to an electric device (for example, the vehicle 1000), so as to replenish energy to the electric device.

The energy storage device may be located inside the charging pile (for example, an integrated storage and charging machine), or may be located outside the charging pile.

The above are only preferred embodiments of the present application, which only specifically describe the technical principles of the present application. These descriptions are only used to explain the principles of the present application, and cannot be interpreted in any way as limiting the scope of protection of the present application. Based on the explanation here, any modification, equivalent replacement, or improvement made within the spirit and principle of the present application, as well as other specific implementations of the present application that a person skilled in the art could think of without creative efforts shall be included in the scope of protection the present application.

## Claims

1. An electronic control device (1120), comprising:
a battery management circuit board (1121) provided with a first connecting terminal (1122), the first connecting terminal (1122) being electrically connected to an internal circuit of the battery management circuit board (1121); and
an electrical connection assembly (1123), comprising a bearing member (11231) and a conductive component (11232), the conductive component (11232) being connected to the bearing member (11231), the conductive component (11232) comprising a conductive component (11232), a second connecting terminal (11233), and a third connecting terminal (11240), the second connecting terminal (11233) being communicated with the third connecting terminal (11240) by means of the conductive component (11232), the second connecting terminal (11233) being connected to the first connecting terminal (1122), and the third connecting terminal (11240) being used to connect a busbar or a relay (1124) inside the electrical control device.

2. The electronic control device (1120) according to claim 1, wherein a plurality of the third connecting terminals (11240) are provided, and each of the third connecting terminals (11240) extends from a position connected to the conductive component (11232) towards a direction away from the conductive component (11232).

3. The electronic control device (1120) according to claim 1, wherein the second connecting terminal (11233) is configured to be plugged into the first connecting terminal (1122).

4. The electronic control device (1120) according to claim 3, wherein an elastic limiting portion (11236) is formed on the first connecting terminal (1122) or the second connecting terminal (11233) to enable an elastic limiting connection between the first connecting terminal (1122) and the second connecting terminal (11233).

5. The electronic control device (1120) according to claim 4, wherein the second connecting terminal (11233) comprises a plurality of contact pins (11234), each of the contact pins (11234) comprising a base portion (11235), the elastic limiting portion (11236) connected to the base portion (11235), and a plug pin portion (11237) connected to the elastic limiting portion (11236), the elastic limiting portion (11236) being elastically deformable; and a plurality of conducting holes (11221) are formed on the first connecting terminal, each of the elastic limiting portions (11236) being correspondingly plugged and limited in each of the conducting holes (11221), and the plug pin portion (11237) being electrically connected to a hole wall of the conducting hole (11221).

6. The electronic control device (1120) according to claim 5, wherein the elastic limiting portion (11236) comprises two elastic arms (11236a) connected between the base portion (11235) and the plug pin portion (11237), and the two elastic arms (11236a) are disposed facing each other and form an elastic contraction space (11236b).

7. The electronic control device (1120) according to claim 6, wherein the conductive component (11232) is disposed opposite to the battery management circuit board (1121) in a first direction (X), the plug pin portion (11237) extends in the first direction (X), and a central axis of the conducting hole (11221) is parallel to the first direction (X).

8. The electronic control device (1120) according to any one of claims 1-7, wherein the conductive component (11232) and the bearing member (11231) are injection-molded into an integrated structure.

9. The electronic control device (1120) according to any one of claims 1-7, wherein the conductive component (11232) and the third connecting terminal (11240) are welded into an integrated structure; or
the conductive component (11232) is connected to the third connecting terminal (11240) by means of a fastening assembly.

10. The electronic control device (1120) according to any one of claims 1-7, wherein the bearing member (11231) is provided with a receiving groove (11231a) in which the conductive component (11232) is received, one end of each of the third connecting terminals (11240) is connected to the conductive component (11232), and the other end protrudes outside a groove opening of the receiving groove (11231a).

11. The electronic control device (1120) according to claim 10, wherein the bearing member (11231) comprises a bottom plate (11231b) and a vertical plate (11231c) connected in a circumference direction of the bottom plate (11231b) through enclosure, the bottom plate (11231b) and the vertical plate (11231c) jointly forming the receiving groove (11231a) through enclosure; and the conductive component (120) is fitted and connected to the bottom plate (11231b).

12. The electronic control device (1120) according to claim 10, wherein the battery management circuit board (1121) is disposed opposite to the conductive component (11232), the battery management circuit board (1121) is located on one side of the groove opening of the receiving groove (11231a), and the battery management circuit board (1121) is provided with a through hole (11211) for avoiding the third connecting terminal (11240).

13. The electronic control device (1120) according to any one of claims 1-7, wherein the electronic control device (1120) further comprises a first positioning structure (11238) connected to the battery management circuit board (1121) and a second positioning structure (11239) connected to the bearing member (11231), and the first positioning structure (11238) is plugged into and mated with the second positioning structure (11239).

14. The electronic control device (1120) according to any one of claims 1-7, wherein the conductive component (11232) is arranged to extend in a second direction (Y), the second connecting terminal (11233) is located at one extending end of the conductive component (11232), and the plurality of the third connecting terminals (11240) are arranged at intervals in the second direction (Y).

15. The electronic control device (1120) according to any one of claims 1-7, wherein the electronic control device (1120) comprises a locking assembly (1126) which is connected between a conducting terminal (11241) and the third connecting terminal (11240).

16. The electronic control device (1120) according to any one of claims 1-7, wherein the conducting terminal (11241) is a high-voltage terminal.

17. A battery device (1100), comprising a battery cell assembly (1110) and the electronic control device (1120) according to any one of claims 1-16, wherein the battery cell assembly (1110) is electrically connected to the electronic control device (1120).

18. An energy storage device, comprising a plurality of battery devices (1100) according to claim 17, wherein the battery devices (1100) are used to store or provide electric energy.

19. An energy storage system, comprising a power conversion device and the energy storage device according to claim 18, wherein the power conversion device is used to electrically connect a power generation device and the energy storage device.

20. An electric device, comprising the electronic control device (1120) according to any one of claims 1-16, the battery device (1100) according to claim 17, the energy storage device according to claim 18, or the energy storage system according to claim 19, wherein the battery device (1100) is used to store or provide electric energy.

21. A charging network, comprising a charging pile and the energy storage device according to claim 18 or the energy storage system according to claim 19, wherein the energy storage device is used to provide electric energy for the charging pile.
